# EUROPÄISCHE PATENTSCHRIFT

(11) **EP 2 828 592 B1**
(45) Veröffentlichungstag und Bekanntmachung des Hinweises auf die Patenterteilung: **20.11.2019**
(21) Anmeldenummer: 13714875.5
(22) Anmeldetag: 19.03.2013
(51) Int. Cl.: F25B 49/02

(54) **KÄLTEMITTELVERDICHTER**
REFRIGERANT COMPRESSOR
COMPRESSEUR DE FLUIDE FRIGORIGÈNE

(30) Priorität: 21.03.2012 DE 102012102405
(43) Veröffentlichungstag der Anmeldung: 28.01.2015
(73) Patentinhaber: BITZER Kühlmaschinenbau GmbH, 71065 Sindelfingen (DE)
(72) Erfinder: BLUMHARDT, Rolf, 71263 Weil der Stadt (DE)
(74) Vertreter: Hoeger, Stellrecht & Partner Patentanwälte mbB
(86) Internationale Anmeldenummer: PCT/EP2013/055645
(87) Internationale Veröffentlichungsnummer: WO 2013/139770

(56) Entgegenhaltungen:
- EP-A2- 1 134 520
- WO-A1-2010/011226
- US-A- 5 806 327
- US-A1- 2002 026 803
- US-A1- 2006 075 771

## Beschreibung

Die Erfindung betrifft einen Kältemittelverdichter, umfassend einen Antriebsmotor und eine Verdichtereinheit, welche ein über einen Saugeinlass eintretendes Kältemittel verdichtet und über einen Druckeinlass austreten lässt.

Derartige Kältemittelverdichter sind üblicherweise aus dem Stand der Technik bekannte Verdichter. Beispielsweise sind derartige Verdichter in der US 2006/0075771 A1 offenbart.

Bei derartigen Kältemittelverdichtern besteht jedoch die Notwendigkeit, diese vor Beschädigungen zu schützen, so dass derartige Kältemittelverdichter nur in zulässigen Verdichterzuständen betrieben werden sollten, die durch ein in einem Einsatzdiagramm vorgegebenes Einsatzfeld definiert sind.

Aus diesem Grund werden derartige Kältemittelverdichter teilweise mit einer externen Überwachung betrieben, welche beispielsweise in dem User-Manual der Firma CAREL Industries HQs, Via del Industria, 35020 Brugine-Padova (Italy), Manual Version: 1.6 dated 24/08/09 mit dem Titel "Standard Chiller Modular HP 1/4 Generic /Bitzer screw compressor and CAREL valve, Application program for pCO¹, pCO², pCO^{3"} beschrieben ist.

Eine derartige Kombination eines Kältemittelverdichters mit einer externen Überwachung birgt jedoch eine Vielzahl von Problemen, da sich das Einsatzfeld in der externen Überwachung nicht unbedingt mit den zulässigen Verdichterzuständen des Kältemittelverdichters deckt.

Daher ist die Betriebssicherheit eines derartigen Kältemittelverdichters nicht sichergestellt.

Der Erfindung liegt daher die Aufgabe zugrunde, einen Kältemittelverdichter der eingangs beschriebenen Art derart zu verbessern, dass dieser möglichst betriebssicher arbeitet.

Diese Aufgabe wird bei einem Kältemittelverdichter der eingangs beschriebenen Art erfindungsgemäß durch die Merkmale des Anspruchs 1 gelöst.

Der Vorteil der erfindungsgemäßen Lösung ist darin zu sehen, dass durch die Integration der Überwachung in die Verdichtersteuerung in Form der Verdichterüberwachung sichergestellt ist, dass die zulässigen Verdichterzustände innerhalb des vorgegebenen Einsatzfeldes stets den Verdichterzuständen entsprechen, wie sie herstellerseitig vorgesehen sind, da in diesem Fall aufgrund der Integration der Verdichterüberwachung in die Verdichtersteuerung herstellerseitig das Einsatzfeld mit den zulässigen Verdichterzuständen vorgegeben werden kann, so dass sämtliche Fehlerquellen, die bei der Kombination einer externen Steuerung mit einem Kältemittelverdichter vorkommen können, vermieden werden.

Besonders zweckmäßig ist es dabei, wenn das Einsatzfeld der zulässigen Verdichterzustände in einem Speicher der Verdichterüberwachung anwenderseitig unveränderbar abgelegt ist.

Die erfindungsgemäße Lösung sieht ferner vor, dass das Einsatzfeld mit den zulässigen Verdichterzuständen in der Verdichterüberwachung verdichterspezifisch vorgegeben ist.

Das heißt, dass in diesem Fall der Hersteller des Kältemittelverdichters die Möglichkeit hat, spezifisch für Typ von Kältemittelverdichter oder für jeden einzelnen Kältemittelverdichter das Einsatzfeld festzulegen und somit einerseits die Möglichkeit hat, die möglichen Verdichterzustände auszuschöpfen, andererseits die Möglichkeit hat, die kritischen Verdichterzustände sicher auszugrenzen, und dies spezifisch für jeden Typ von Kältemittelverdichter oder jeden einzelnen Kältemittelverdichter.

Insbesondere ist bei einer Ausführungsform vorgesehen, dass die Verdichtersteuerung eine Motorsteuerung für den drehzahlregelbaren Antriebsmotor umfasst und dass die Verdichterüberwachung zum Abschalten des Kältemittelverdichters unmittelbar mit der Motorsteuerung desselben zusammenwirkt, so dass auch diesbezügliche Fehlerquellen, die bei externen Steuerungen auftreten, vermieden werden können.

Hinsichtlich der Arbeitsweise der Verdichterüberwachung wurden bislang keine näheren Angaben gemacht.

Die vorstehend beschriebene Lösung der Verdichterüberwachung hat den Nachteil, dass diese Verdichterüberwachung erst dann aktiv wird und ein Abschalten des Kältemittelsverdichters entweder unmittelbar oder mit einer Zeitverzögerung einleitet, wenn bereits ein Überschreiten des Einsatzfeldes vorliegt.

Dies führt während der Betriebsdauer zu einer beachtlichen Häufigkeit der Abschaltung des Kältemittelverdichters.

Um die Häufigkeit der Abschaltung des Kältemittelverdichters zu verringern ist vorzugsweise vorgesehen, dass die Verdichterüberwachung die relative Lage des ermittelten Verdichterzustandes im Bezug auf eine das Einsatzfeld umschließende Einsatzgrenze ermittelt und die Informationen über die relative Lage an einer Schnittstelle für eine übergeordnete Steuerung eines Kühlkreislaufs zur Verfügung stellt.

Damit kann eine übergeordnete Steuerung bereits vor Erreichen der Einsatzgrenze eingreifen und versuchen, den Verdichterzustand in dem Einsatzfeld zu halten.

Hinsichtlich der Erfassung des Verdichterzustandes innerhalb des Einsatzfeldes wurden bislang keine näheren Angaben gemacht.

So sieht eine vorteilhafte Lösung vor, dass die Verdichterüberwachung die relative Lage des ermittelten Verdichterzustands im Einsatzfeld im Bezug auf die Einsatzgrenze dadurch ermittelt, dass im Einsatzfeld Zustandszonen definiert sind und dass die Verdichterüberwachung überprüft, ob der Verdichterzustand in einer dieser Zustandszonen liegt oder nicht.

Durch die Aufteilung des Einsatzfeldes in verschiedene Zustandszonen besteht in einfacher Weise die Möglichkeit, den jeweiligen Verdichterzustand zu charakterisieren und somit zu erfassen, inwieweit die Gefahr besteht, dass der Verdichterzustand das Einsatzfeld verlässt oder der Verdichterzustand in einem unbedenklichen Bereich des Einsatzfeldes verbleibt.

Eine Zustandszone ist beispielsweise als Regelbetriebszone definiert, bei deren Verdichterzustände nicht die Gefahr besteht, dass diese kurzfristig das Einsatzfeld verlassen.

Beispielsweise sieht dabei eine Lösung vor, dass in dem Einsatzfeld mindestens eine im Anschluss an die Einsatzgrenze liegende Warnzone als Zustandszone definiert ist und dass die Verdichterüberwachung überprüft, ob der Verdichterzustand in der mindestens einen Warnzone liegt, wobei die Verdichterüberwachung dann, wenn sie erkennt, dass der Verdichterzustand in der mindestens einen Warnzone liegt, an der Steuerungsschnittstelle eine Meldung ausgibt.

Eine besonders vorteilhafte Lösung sieht vor, dass in dem Einsatzfeld im Anschluss an die Einsatzgrenze mehrere Warnzonen als Zustandszonen definiert sind und dass die Verdichterüberwachung überprüft, ob der Verdichterzustand in einer der Warnzonen liegt, wobei die Verdichterüberwachung dann, wenn der Verdichterzustand in einer der Warnzonen liegt, an der Schnittstelle ein die jeweilige Warnzone kennzeichnendes Warnsignal als Meldung ausgibt.

Der Vorteil dieser Lösung ist darin zu sehen, dass es mit der Unterteilung in unterschiedliche Warnzonen möglich ist, dass warnzonenspezifisch ein Warnsignal ausgegeben werden kann, welches der übergeordneten Steuerung anzeigt, in welcher Warnzone der Verdichterzustand zum jeweiligen Moment liegt, so dass sich die übergeordnete Steuerung warnzonenspezifisch reagieren kann, um zu verhindern, dass der Verdichterzustand das Einsatzfeld verlässt.

Die Warnzonen könnten bei den vorstehend beschriebenen Lösungen so liegen, dass sie im Abstand von der Einsatzgrenze liegen.

Besonders vorteilhaft ist es jedoch, wenn in dem Einsatzfeld die Warnzonen direkt an die Einsatzgrenze angrenzend definiert sind, so dass die jeweilige Warnzone bis zur jeweiligen Einsatzgrenze reicht.

Darüber hinaus bestünde grundsätzlich die Möglichkeit, nur in den Bereichen des Einsatzfeldes, die an einen oder mehrere häufig überschrittene Einsatzgrenzabschnitte anschließend eine Warnzone vorzusehen.

Eine besonders günstige Lösung sieht jedoch vor, dass innerhalb der um das Einsatzfeld umlaufenden Einsatzgrenze mindestens eine, insbesondere mehrere, längs der Einsatzgrenze umlaufende aneinander anschließende Warnzonen angeordnet sind, so dass vor Erreichen jedes Einsatzgrenzabschnitts der Verdichterzustand in eine Warnzone fällt und somit die Verdichterüberwachung eine Meldung ausgibt.

Als Warnzonen sind dabei die verschiedensten Warnzonen denkbar.

Als Warnzone sind beispielsweise mindestens eine oder mehrere der nachfolgend definierten Warnzonen:
eine Warnzone für eine niedrige erste Sättigungstemperatur,
eine Warnzone für eine hohe zweite Sättigungstemperatur,
eine Warnzone für eine hohe erste Sättigungstemperatur,
eine Warnzone für eine niedrige zweite Sättigungstemperatur,
eine Warnzone für eine niedrige erste Sättigungstemperatur und eine hohe zweite Sättigungstemperatur,
eine Warnzone für eine hohe erste Sättigungstemperatur und eine niedrige zweite Sättigungstemperatur,
eine Warnzone für eine niedrige erste Sättigungstemperatur und eine niedrige zweite Sättigungstemperatur,
eine Warnzone für eine hohe erste Sättigungstemperatur und eine hohe zweite Sättigungstemperatur.
vorgesehen.

Alternativ zum Erfassen der Lage des Verdichterzustandes in dem Einsatzfeld sieht eine weitere vorteilhafte Lösung vor, dass die Verdichterüberwachung die relative Lage des ermittelten Verdichterzustandes im Einsatzfeld in Form eines Abstandes von der Einsatzgrenze ermittelt und an der Schnittstelle als Meldung ausgibt.

Eine derartige Ermittlung des Abstandes des Verdichterzustandes von der Einsatzgrenze kann in unterschiedlichster Art und Weise erfolgen.

Die umfassende Lösung wäre die, dass ausgehend vom Verdichterzustand die Einsatzgrenze in jeder der Richtungen des Einsatzdiagramms ermittelt und der nächstliegende Abstand ausgegeben wird.

Eine vereinfachte Lösung sieht jedoch vor, dass zur Ermittlung des Abstandes des Verdichterzustandes von der Einsatzgrenze eine Ermittlung eines Abstandes von mindestens einem der folgenden Einsatzgrenzabschnitte:
einem Einsatzgrenzabschnitt, der einer ersten niedrigen Sättigungstemperatur entspricht,
einem Einsatzgrenzabschnitt, der einer hohen zweiten Sättigungstemperatur entspricht,
einem Einsatzgrenzabschnitt, der einer hohen ersten Sättigungstemperatur entspricht,
einem Einsatzgrenzabschnitt, der einer niedrigen zweiten Sättigungstemperatur entspricht,
einem Einsatzgrenzabschnitt, der einer niedrigen ersten Sättigungstemperatur entspricht und einer hohen zweiten Sättigungstemperatur entspricht,
einem Einsatzgrenzabschnitt, der einer hohen ersten Sättigungstemperatur entspricht und einer niedrigen zweiten Sättigungstemperatur entspricht,
einem Einsatzgrenzabschnitt, der einer hohen ersten Sättigungstemperatur entspricht und einer hohen zweiten Sättigungstemperatur entspricht,
einem Einsatzgrenzabschnitt, der einer niedrigen ersten Sättigungstemperatur entspricht und einer niedrigen zweiten Sättigungstemperatur entspricht.

Darüber hinaus sieht eine weitere vorteilhafte Ausführungsform der Verdichterüberwachung vor, dass diese die zeitliche Änderung des Abstandes des Verdichterzustandes von der Einsatzgrenze ermittelt.

Die Ermittlung der zeitlichen Änderung des Abstandes von der Einsatzgrenze hat den Vorteil, dass dadurch die Möglichkeit besteht, das zeitliche Verhalten des Verdichterzustandes zu erkennen und insbesondere das zeitliche Verhalten der Änderung des Verdichterzustandes zu erkennen, so dass die übergeordnete Steuerung die Möglichkeit hat, rechtzeitig zu reagieren, um den Verdichterzustand in dem Einsatzfeld zu halten.

Eine weitere vorteilhafte Lösung sieht vor, dass die Verdichterüberwachung eine Temperatur des Schmiermittels ermittelt, um sicherzustellen, dass das Schmiermittel nicht zu heiß wird, und somit der Schmiermittelfilm beispielsweise in den Lagern abreißt.

Insbesondere ist dabei vorgesehen, dass die Verdichterüberwachung bei Überschreiten einer Schmiermittelgrenztemperatur eine Abschaltung des Kältemittelverdichters einleitet.

Beispielsweise wäre es denkbar, die Abschaltung des Kältemittelverdichters unmittelbar oder mit Verzögerung einzuleiten.

Um jedoch eine derartige Abschaltung möglichst zu vermeiden, ist vorzugsweise vorgesehen, dass die Verdichterüberwachung den relativen Abstand der Schmiermitteltemperatur von der Schmiermittelgrenztemperatur ermittelt und insbesondere bei einer Annäherung an die Schmiermittelgrenztemperatur eine Meldung abgibt.

Beispielsweise kann der Abstand von der Schmiermittelgrenztemperatur dadurch ermittelt werden, dass dann, wenn die Schmiermitteltemperatur einen unterhalb der Schmiermittelgrenztemperatur liegenden Temperaturbereich erreicht, seitens der Verdichterüberwachung eine Schmiermitteltemperaturwarnung an der Schnittstelle für die übergeordnete Steuerung abgegeben wird.

Eine andere Möglichkeit sieht vor, dass die Verdichterüberwachung den Abstand der Schmiermitteltemperatur von der Schmiermittelgrenztemperatur ermittelt und als Meldung an der Schnittstelle ausgibt.

Eine weitere vorteilhafte Ausführungsform der erfindungsgemäßen Lösung sieht vor, dass die Verdichterüberwachung eine Motortemperatur überwacht und bei Überschreiten einer Motorgrenztemperatur ein Abschalten des Kältemittelverdichters einleitet.

Zur Reduzierung der Abschalthäufigkeit ist vorzugsweise vorgesehen, dass die Verdichterüberwachung dann, wenn die Motortemperatur einen unterhalb der Motorgrenztemperatur liegenden Temperaturbereich erreicht eine Motortemperaturwarnung an der Schnittstelle ausgibt, so dass gegebenenfalls die übergeordnete Steuerung noch in der Lage ist, Maßnahmen zur Absenkdung der Motortemperatur einzuleiten.

Eine andere vorteilhafte Lösung sieht vor, dass die Verdichterüberwachung einen Schmiermittelstand erfasst und dass bei Unterschreiten einer Schmiermitteluntergrenze die Verdichtersteuerung ein Abschalten des Kältemittelverdichters einleitet.

Dies ist beispielsweise dadurch möglich, dass ein einen minimalen Schmiermittelstand erfassender Sensor vorgesehen ist und dass dann, wenn dieser Sensor erkennt, dass der Schmiermittelstand unterhalb einer Schmiermitteluntergrenze liegt, die Verdichtersteuerung die Abschaltung des Kältemittelverdichters einleitet.

Eine weitere Aufgabe der Erfindung ist, eine Verdichterüberwachung zu schaffen, die einen verbesserten Betrieb des Kältemittelverdichters ermöglicht. Diese Aufgabe wird durch eine Verdichterüberwachung nach Anspruch 17 gelöst.

Der Vorteil dieser Lösung ist, dass damit die Häufigkeit eines Abschaltens des Kältemitteldichters reduziert werden kann.

Weitere Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines erfindungsgemäßen Kältemittelverdichters;
- Fig. 2: eine Ansicht in Richtung des Pfeils A in Fig. 1;
- Fig. 3: einen Schnitt längs Linie 3-3 in Fig. 2;
- Fig. 4: einen Schnitt längs Linie 4-4 in Fig. 2;
- Fig. 5: eine schematische Darstellung eines Kühlkreislaufs mit einem Kältemittelverdichter;
- Fig. 6: eine Darstellung eines Einsatzfeldes von Verdichterzuständen in einem Einsatzdiagramm bei einer ersten Ausführungsform;
- Fig. 7: eine Darstellung ähnlich Fig. 6 bei einem Ausführungsbeispiel einer zweiten Ausführungsform;
- Fig. 8: eine Darstellung ähnlich Fig. 6 bei einem weiteren Ausführungsbeispiel der zweiten Ausführungsform;
- Fig. 9: eine schematische Darstellung einer Überwachung einer Schmiermitteltemperatur und
- Fig. 10: eine schematische Darstellung einer Überwachung einer Motortemperatur.

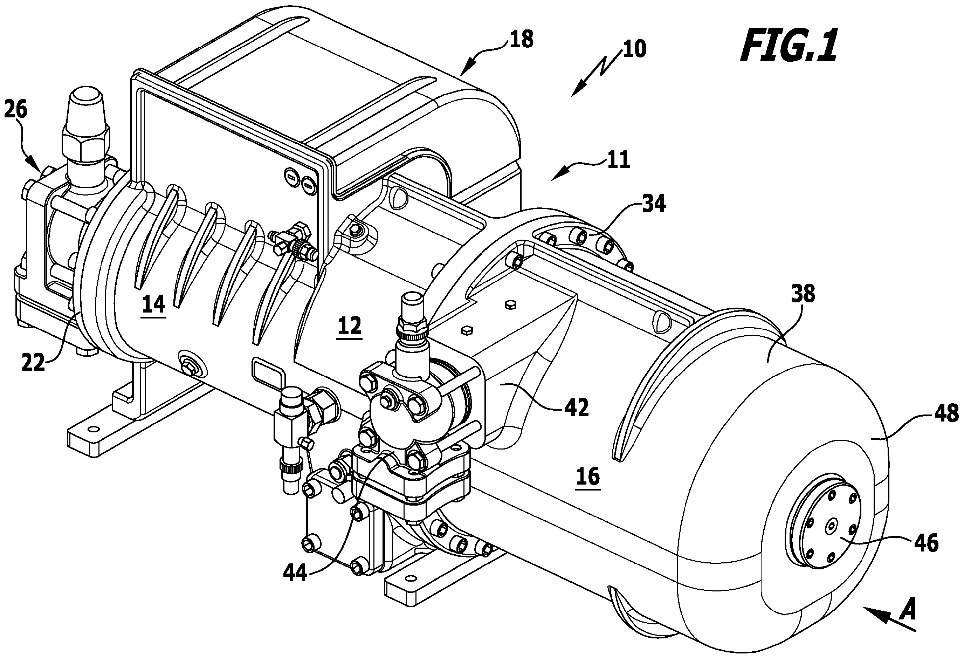

Ein in Fig. 1 bis 3 dargestelltes Ausführungsbeispiel eines erfindungsgemäßen Kältemittelverdichters 10 weist ein Gesamtgehäuse 11 auf, welches ein Verdichtergehäuse 12, ein auf einer Seite des Verdichtergehäuses 12 angeordnetes Motorgehäuse 14 und ein auf einer dem Motorgehäuse 14 gegenüberliegenden Seite des Verdichtergehäuses 12 angeordnetes Druckgehäuse 16 umfasst. Dabei können das Verdichtergehäuse 12, das Motorgehäuse 14 und das Druckgehäuse 16 separate Teile des Gesamtgehäuses 11 und zur Bildung desselben zusammengesetzt sein oder es können das Verdichtergehäuse 12 und das Motorgehäuse 14 und/oder das Verdichtergehäuse 12 und das Druckgehäuse 16 als zusammenhängende Teile ausgebildet sein.

Ferner trägt das Motorgehäuse 14 im Bereich eines Teilumfangs ein Steuerungsgehäuse 18.

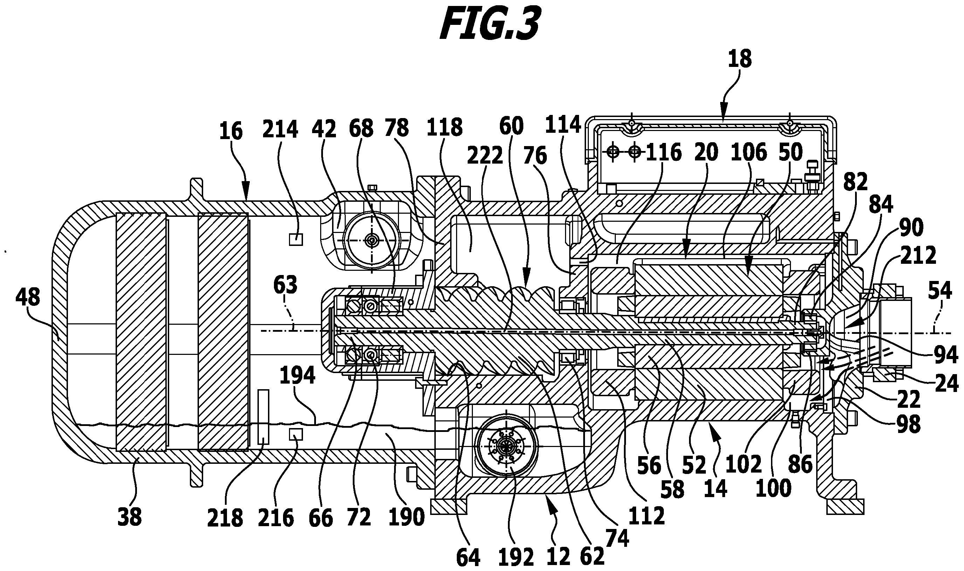

Wie in Fig. 3 dargestellt, umschließt das Motorgehäuse 14 einen Motorraum 20 und ist an seinem dem Verdichtergehäuse 12 abgewandten Ende durch einen eine Stirnwand des Motorgehäuses 14 bildenden stirnseitigen Deckel 22 verschlossen, welcher seinerseits mit einem Sauggasanschluss 24 versehen ist, über welchen dem Kältemittelverdichter anzusaugendes Kältemittel zuführbar ist.

Wie in Fig. 1 dargestellt, ist der Sauggasanschluss 24 vorzugsweise mit einem Absperrventil 26 versehen, welches mit einer zu dem Kältemittelverdichter führenden in den Zeichnungen nicht dargestellten Sauggasleitung verbunden ist.

Das Druckgehäuse 16 ist mit dem Verdichtergehäuse 12 lösbar verbunden, und zwar über einen Druckgehäuseflansch 34, welcher mit einem Montageflansch 36 des Verdichtergehäuses 12 verbindbar ist, wobei sich ausgehend von dem Druckgehäuseflansch 34 das Druckgehäuse 16 in Form einer zylindrischen, endseitig durch eine Endwand 48 geschlossenen Kapsel 38 erstreckt.

Ferner trägt das Druckgehäuse 16 einen Druckauslass 42, an welchem ein druckgasseitiges Absperrventil 44 montierbar ist.

Vorzugsweise ist die Kapsel 38 ferner noch im Bereich ihrer dem Verdichtergehäuse 12 gegenüberliegenden Endwand 48 mit einem Zugangsdeckel 46 zugänglich abgeschlossen (Fig. 1).

Wie in Fig. 3 dargestellt, sitzt in dem Motorgehäuse 14 ein als Ganzes mit 50 bezeichneter Elektromotor, ein fest in dem Motorgehäuse 14 angeordneter Stator 52 sowie ein relativ zum Stator 52 um eine Motorachse 54 drehbar gelagerter Rotor 56, wobei der Rotor 56 auf einer Antriebswelle 58 sitzt.

Die Antriebswelle 58 durchsetzt einerseits den Rotor 56 in Richtung der Motorachse 54 und erstreckt sich andererseits in das Verdichtergehäuse 12 eines als Ganzes mit 60 bezeichneten Schraubenverdichters hinein.

In ihrem sich im Verdichtergehäuse 12 erstreckenden Bereich trägt die Antriebswelle 58 einen Schraubenläufer 62, der in dem Verdichtergehäuse 12 in einer Schraubenläuferbohrung 64 angeordnet und in dieser um eine mit der Motorachse 54 zusammenfallende Drehachse 63 drehbar ist.

Darüber hinaus erstreckt sich die Antriebswelle 58 auf seiner dem Elektromotor 50 gegenüberliegenden Seite noch über den Schraubenläufer 62 hinaus und bildet einen Endabschnitt 66, der in einem innerhalb des Druckgehäuses 16 angeordneten Lagergehäuse 68 drehbar gelagert ist, wobei hierzu in dem Lagergehäuse 68 ein druckseitiger Lagersatz 72 vorgesehen ist.

Ferner ist die Antriebswelle 58 zwischen dem Schraubenläufer 62 und dem Rotor 56 in einem sich an eine Saugseite des Schraubenläufers 62 anschließend angeordneten saugseitigen Lagersatz 74 gelagert.

Beispielsweise ist der saugseitige Lagersatz 74 an einer saugseitigen Wand 76 des Verdichtergehäuses 12 gehalten, während der druckseitige Lagersatz 72 an einer druckseitigen Wand 78 gehalten ist, wobei hierzu das Lagergehäuse 68 von der druckseitigen Wand 78 getragen ist.

Zur exakten Führung des Rotors 56 koaxial zur Motorachse 54 weist die Antriebswelle 58 noch einen sich über den Rotor 56 hinaus erstreckenden Endabschnitt 82 auf, der seinerseits in einem Führungslager 84 gelagert ist, das in einer koaxial zur Motorachse 54 angeordneten Lageraufnahme 86 sitzt, die fest am Motorgehäuse 14 angeordnet ist, und zwar nahe des Deckels 22.

Dabei könnte die Lageraufnahme 86 direkt unabhängig vom Deckel 22 an dem Motorgehäuse 14 abgestützt sein.

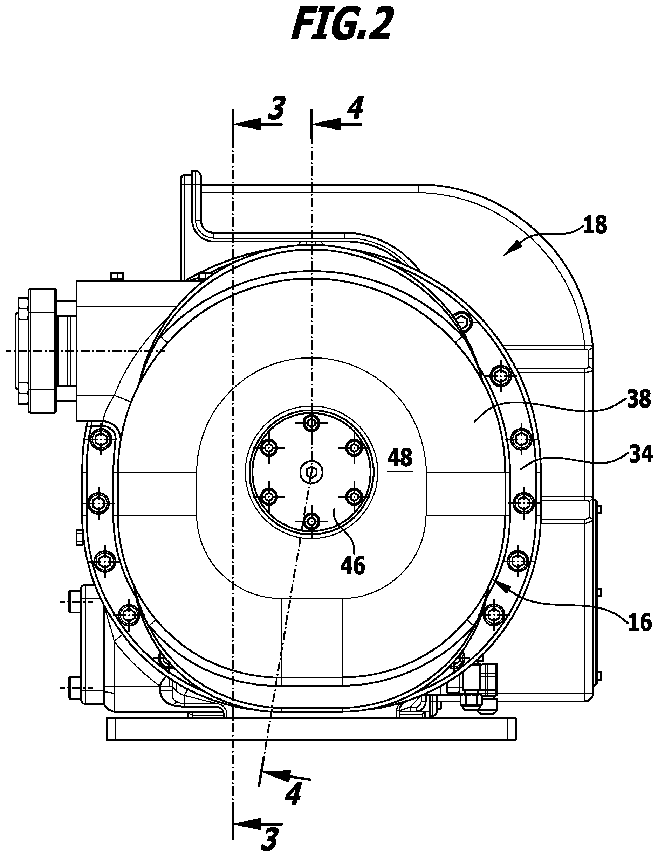

Vorzugsweise ist die Lageraufname 86, wie in Fig. 2 dargestellt, an dem Deckel 22 gehalten, wobei die Lageraufnahme 86 durch mehrere Stege im Abstand von einem Deckelboden 92 gehalten ist.

Vorzugsweise ist um die Lageraufnahme 86 herum in einem Innenraum 100 ein Sauggasfilter 98 angeordnet, welchen das Sauggas durchströmen muss.

Das Sauggas strömt, wie in Fig. 3 gestrichelt dargestellt, von dem Absperrventil 26 in Richtung parallel zur Motorachse 54 durch den Sauggasanschluss 24 und eine Ansaugöffnung 94 in einen einen Saugeinlass bildenden Einströmraum 90, der zwischen der Ansaugöffnung 94 und der Lageraufnahme 86 angeordnet ist.

Von dem Einströmraum 90 strömt dann das Sauggas mit einer schräg zur Motorachse 54 verlaufenden Komponente durch die Einströmöffnungen 96 in den Innenraum 100 unter Ausbildung mehrerer Strömungspfade, wobei beispielsweise saugseitige Wicklungsköpfe 102 des Stators 52 angeströmt werden.

Vorzugsweise ist die Ansaugöffnung 94 im Deckel 22 so angeordnet, dass die Motorachse 54 diese durchsetzt, insbesondere ist die Ansaugöffnung 94 koaxial zur Motorachse 54 angeordnet, so dass im Bereich des Innenraums 100 und der Lageraufnahme 86 zur Motorachse 54 näherungsweise rotationssymmetrische Strömungsverhältnisse entstehen.

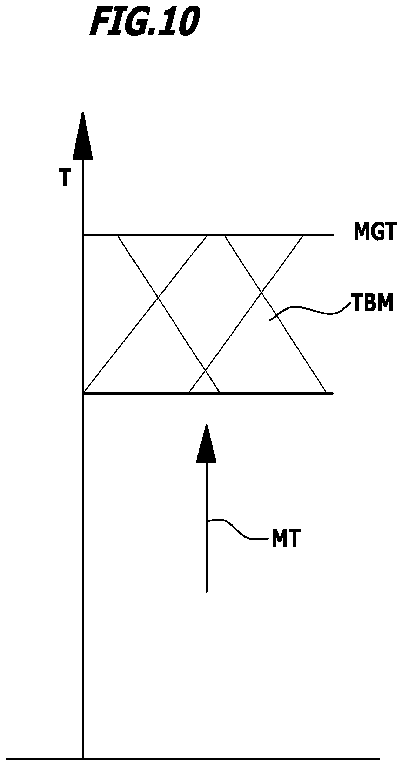

Nach Durchströmen der Ausnehmungen 106 und des Spalts 108 sammelt sich das Sauggas im Bereich von dem Verdichtergehäuse 12 zugewandten Wicklungsköpfen 112 des Stators 52 in einem verdichtergehäuseseitigen Innenraum 116 des Motorgehäuses 14 und ist in der Lage, auch diese Wicklungsköpfe 112 zu kühlen, bevor das angesaugte Gas- oder Kältemittel, wie in Fig. 10 dargestellt, durch in der saugseitigen Wand 76 des Verdichtergehäuses 12 vorgesehene Durchbrüche 114 hindurchtritt, und dabei in einen Ansaugraum 118 des Verdichtergehäuses 12 eintritt.

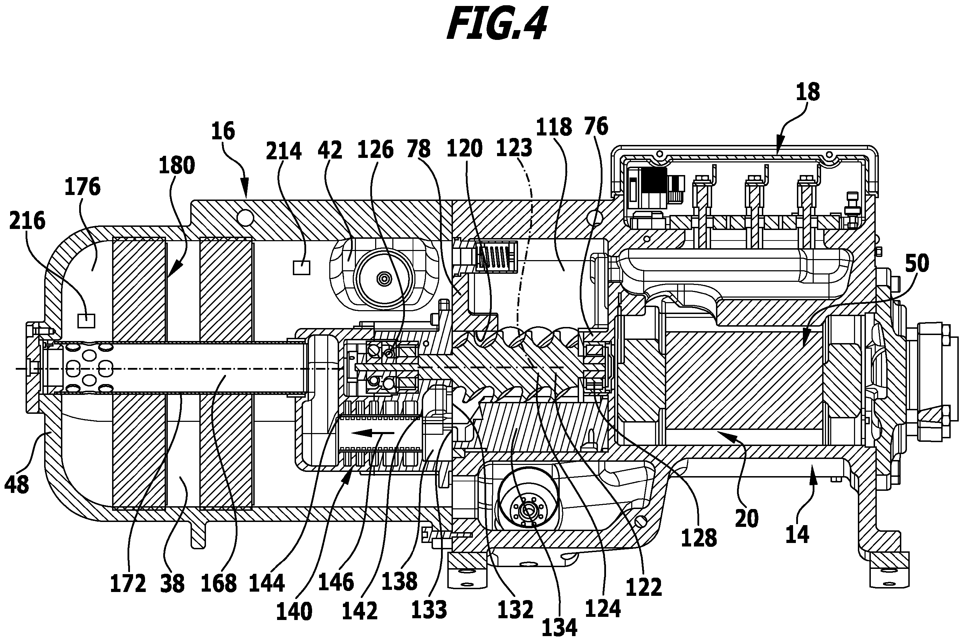

Wie in Fig. 3 und Fig. 4 dargestellt, ist neben dem ersten Schraubenläufer 62 noch ein zweiter, mit diesem zusammenarbeitender und in einer Schraubenläuferbohrung 120 angeordneter Schraubenläufer 122 vorgesehen, wobei auch der zweite Schraubenläufer 122 um eine zur Motorachse 54 und zur Drehachse 63 parallele Drehachse 123 mittels einer endseitig über den Schraubenläufer 122 überstehenden Lagerwelle 124 in einem druckseitigen Lagersatz 126 gelagert ist und einem saugseitigen Lagersatz 128 gelagert ist.

Die beiden Schraubenläufer 62 und 122 arbeiten nun derart zusammen, dass Kältemittel oder Gas vom Ansaugraum 118 angesaugt wird, durch die ineinandergreifenden Schraubenläufer 62 und 122 verdichtet und als verdichtetes Gas oder Kältemittel im Bereich eines druckseitigen Auslassfensters 132, festgelegt durch die druckseitig freistehenden Umfangsbereiche und Stirnseitenbereiche der Schraubenläufer 62, 122 in das Verdichtergehäuse 12 austritt und aus dem Verdichtergehäuse 12 durch ein Gehäusefenster 133 in das Druckgehäuse 16 übertritt.

Zur Anpassung des Volumenverhältnisses ist hierzu ferner noch ein Schieber 134 vorgesehen, dessen Ausbildung und Funktion beispielsweise in der deutschen Patentanmeldung 10 2011 051 730.8 beschrieben ist.

Um die Druckpulsationen des durch das Auslassfenster 132 austretenden komprimierten Gases oder Kältemittels zu dämpfen, ist im unmittelbaren Anschluss an das Gehäusefenster 133 im Druckgehäuse 16 eine erste Schalldämpfereinheit 140 vorgesehen, welche eine sich an das Gehäusefenster 132 direkt anschließende Aufnahmekammer 138, eine auf einer dem Gehäusefenster 132 gegenüberliegenden Seite der Aufnahmekammer 138 angeordnete Einlassöffnung 142 und eine Auslassöffnung 144 aufweist, die in einer insbesondere quer zu der druckseitigen Wand 78 und von dieser weg gerichteten, insbesondere zur Motorachse 54 parallelen Strömungsrichtung, 146 durchströmbar sind.

Im Anschluss an die erste Schalldämpfereinheit 140 folgt beispielsweise noch eine zweite Schalldämpfereinheit 160, welche eine sich an die Auslassöffnung 144 unmittelbar anschließende Querströmkammer 162 aufweist, durch welche das aus der ersten Schalldämpfereinheit 140 austretende komprimierte Gas oder Kältemittel in einer quer zur Strömungsrichtung 146 verlaufenden Strömungsrichtung 164 in Richtung eines Auslasses 166 der zweiten Schalldämpfereinheit 160 strömen kann, von welcher dann das komprimierte Gas oder Kältemittel in einem Kanal 168, beispielsweise gebildet durch ein Rohr 172 bis zu der Endwand 48 der Kapsel 38 geführt wird und dort radial durch Öffnungen 174 im Rohr 172 austritt und in einen das Rohr 172 umschließenden Druckraum 176 des Druckgehäuses 16 eintritt.

Um den Kanal 168 herum, insbesondere um das Rohr 172 herum, ist eine Schmiermittelabscheideeinheit 180 in dem Druckraum 176 des Druckgehäuses 16 angeordnet, welche beispielsweise zwei Sätze poröser gasdurchlässiger Strukturen 182 und 184, beispielsweise aus Metall, aufweist, die zu einer Abscheidung von Schmiermittelnebel aus dem unter Druck stehenden Gas oder Kältemittel sorgen.

Nach Durchströmen der Schmiermittelabscheideeinheit 180 hat dann das unter Druck stehende Gas oder Kältemittel die Möglichkeit, über den Druckauslass 42 aus dem Druckgehäuse 16 auszutreten.

Das in der Schmiermittelabscheideeinheit 180 sich sammelnde Schmiermittel bildet einen in Schwerkraftrichtung unten liegenden Bereich des Druckgehäuses 16 und des Verdichtergehäuses 12 ein Schmiermittelbad 190, aus welchem Schmiermittel aufgenommen, durch einen Filter 192 gefiltert und zur Schmierung verwendet wird (Fig. 3).

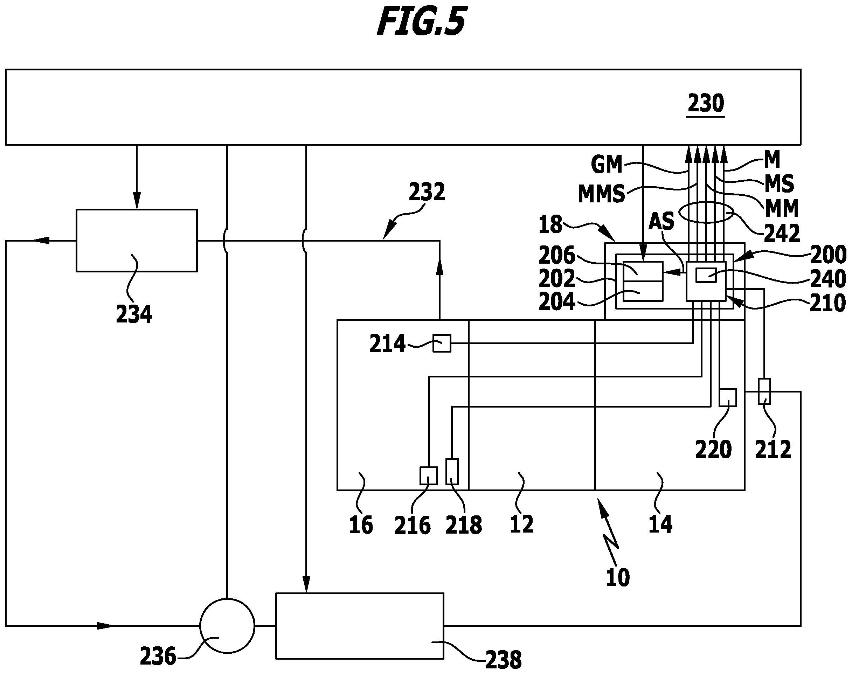

In dem Steuerungsgehäuse 18 sind - wie in Fig. 5 dargestellt - eine als Ganzes mit 200 bezeichnete Verdichtersteuerung vorgesehen, welche eine Motorsteuerung 202 mit einem Umrichter 204 sowie einer Umrichtersteuerung 206 aufweist, sowie eine Verdichterüberwachung 210 vorgesehen, welche einen Verdichterzustand erfasst.

Hierzu ist die Verdichterüberwachung 210 mit einem Drucksensor 212 (Fig. 3 und 5) gekoppelt, der in dem den Saugeinlass bildenden Einströmraum, 90 des Kältemittelverdichters angeordnet ist und einen Druck im Saugeinlass, oder auch Verdichtereingangsdruck genannt, erfasst, der einer ersten Sättigungstemperatur S1 oder auch Verdampfungstemperatur genannt, entspricht.

Ferner ist in dem Druckgehäuse 16 beispielsweise nahe des Druckauslasses 42 ein Drucksensor 214 vorgesehen, welcher einen Druck im Druckauslass 42 misst, der einer zweiten Sättigungstemperatur S2, oder auch Verflüssigungstemperatur genannt, entspricht.

Im Übrigen ist der Verdichterüberwachung 210 noch ein Temperatursensor 216 zugeordnet, der ebenfalls im Druckgehäuse 16 angeordnet ist und die Schmiermitteltemperatur ST des Schmiermittelbades 190 misst.

Außerdem ist der Verdichterüberwachung 210 noch ein Temperatursensor 220 zugeordnet, der eine Motortemperatur MT des Elektromotors 50, beispielsweise an dessen Wicklungsköpfen 102, 112 misst.

Schließlich ist der Verdichterüberwachung 210 noch ein Schmiermittelstandsensor 218 zugeordnet, welcher in der Lage ist, die Menge des Schmiermittels im Schmiermittelbad 190 zu erfassen (Fig. 3 und 5), wobei dies entweder durch Erfassen eines Oberflächenspiegels 194 des Schmiermittelbades 190 erfolgt oder im einfachsten Fall dadurch erfolgt, dass der Schmiermittelstandsensor 218 lediglich erfasst, ob das Schmiermittelbad 190 einen minimalen Schmiermittelstand überschreitet (Fig. 5).

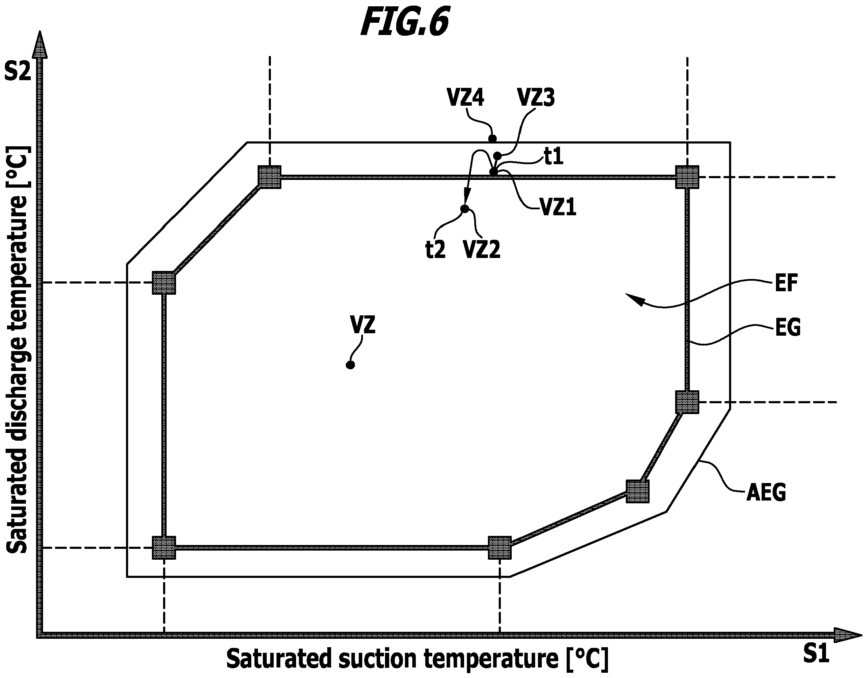

Die Verdichterüberwachung 210 ermittelt nun aus den Werten der Drucksensoren 212 und 214 einen durch die erste Sättigungstemperatur (S1) im Saugeinlass 90 und die zweite Sättigungstemperatur S2 im Druckauslass 42 definierten Verdichterzustand VZ, welcher um den Kältemittelverdichter 10 beschädigungsfrei betreiben zu können, in einem in Fig. 6 dargestellten Einsatzdiagramm, bei welchem auf der X-Achse die erste Sättigungstemperatur S1 am Saugeinlass 90 und auf der Y-Achse die zweite Sättigungstemperatur S2 am Druckauslass 42 angegeben ist, innerhalb eines Einsatzfeldes EF liegen muss, welches von einer Einsatzgrenze EG umschlossen ist (Fig. 6).

Derartige Einsatzdiagramme für Kältemittelverdichter sind beispielsweise in dem Buch "Lexikon der Kältetechnik" von Dieter Schmidt (Hrsg) Verlag C. F. Müller, erläutert, auf welches diesbezüglich Bezug genommen wird.

Alle Verdichterzustände VZ, die somit innerhalb der Einsatzgrenze EG im Einsatzfeld EF liegen, stellen erlaubte und für einen Betrieb des Kältemittelverdichters unbedenkliche Verdichterzustände VZ dar, bei denen ein Betrieb des Kältemittelverdichters 10 seitens des Betreibers erfolgen darf.

Dabei stellt die Einsatzgrenze EG eine in sich geschlossene Umrandung des Einsatzfeldes EF dar, so dass das Einsatzfeld EF in dem Einsatzdiagramm eindeutig definiert ist.

Die Verdichterüberwachung 210 ermittelt nun bei laufendem Kältemittelverdichter 10 ständig oder jeweils nach vorgegebenen Zeitintervallen den Verdichterzustand VZ und vergleicht den ermittelten Verdichterzustand VZ mit den durch das Einsatzfeld EF erlaubten Verdichterzuständen VZ.

Wenn die Verdichterüberwachung 210 feststellt, dass der Verdichterzustand VZ des Kältemittelverdichters aus dem Einsatzfeld EF herauswandert und, wie beispielsweise der Verdichterstand VZ1, außerhalb der Einsatzgrenze EG liegt, so leitet die Verdichterüberwachung 210 ein Abschalten des Kältemittelverdichters 110, insbesondere durch Abschalten des Elektromotors 50, ein. Dieses Abschalten kann im einfachsten Fall ein sofortiges Abschalten sein oder es kann ein verzögertes Abschalten nach Ablauf eines Verzögerungszeitraums Δt sein.

Bei einem verzögerten Abschalten ermittelt die Verdichterüberwachung 210 den Zeitpunkt t1, zu dem die Einsatzgrenze EG überschritten wurde und gibt über eine Schnittstelle 242 eine Grenzmeldung GM an eine übergeordnete Steuerung 230 für einen Kühlkreislauf 232 ab, in dem der erfindungsgemäße Kältemittelverdichter 10 betrieben ist und der auf dem Kältemittelverdichter 10 folgend im Kühlkreislauf 232 einen Verflüssiger 234 ein Expansionsventil 236 sowie einen Verdampfer 238 aufweist, die durch die übergeordnete Steuerung 230 steuerbar sind.

Ist die übergeordnete Steuerung 230 in der Lage, rasch in den Kühlkreislauf 232 einzugreifen, so besteht die Möglichkeit, dass der Verdichterzustand VZ1 wieder in einen Verdichterzustand VZ2 übergeht, der wieder innerhalb des Einsatzfeldes EF liegt, und es wird dann, wenn der Übergang in den Verdichterzustand VZ2 zu einem Zeitpunkt t2 erfolgt ist, dessen Zeitabstand zum Zeitpunkt t1 kleiner ist als der Verzögerungszeitraum Δt keine Abschaltung des Kältemittelsverdichters 10 erfolgen.

Bleibt allerdings der Verdichterzustand VZ1 außerhalb des Einsatzfeldes EF erhalten oder ändert sich dieser in einen Verdichterzustand VZ3 nach einer gewissen Zeit, der noch weiter außerhalb des Einsatzfeldes EF liegt, so erfolgt nach Ablauf des Verzögerungszeitraums Δt ein Abschalten des Kältemittelverdichters 10, wobei hierzu die Verdichtungsüberwachung 210 ein Abschaltsignal AS an die Motorsteuerung 202 übermittelt.

Die Einsatzgrenze EG im Einsatzdiagram der Fig. 6 kann noch durch eine absolute Einsatzgrenze AEG umschlossen sein, die außerhalb des Einsatzfeldes EF und außerhalb der Einsatzgrenze EG sowie im Abstand von der Einsatzgrenze EG verläuft. In diesem Fall arbeitet die Verdichterüberwachung 210 so, dass dann, wenn der Verdichterzustand VZ4 außerhalb der absoluten Einsatzgrenze AEG liegt, ohne weitere Verzögerung ein sofortiges Abschalten des Kältemittelverdichters 10 durch Ausgabe des Abschaltsignals AS seitens der Verdichterüberwachung 210 erfolgt.

Das heißt, dass beispielsweise auch dann, wenn zunächst nur der Verdichterzustand VZ1 außerhalb der Einsatzgrenze EG liegt, jedoch der Verdichterzustand VZ4 vor Ablauf des Verzögerungszeitraums Δt erreicht wird, auch vor Ablauf des Verzögerungszeitraums Δt ein sofortiges Abschalten des Kältemittelverdichters 10 durch Ausgabe des Abschaltsignals AS erfolgt.

Bei der erfindungsgemäßen Lösung sind das Einsatzfeld EF, die Einsatzgrenze EG und die absolute Einsatzgrenze AEG in einem der Verdichterüberwachung 210 zugeordneten Speicher 240 fest abgelegt und werden werkseitig verdichterspezifisch vorgegeben sowie anwenderseitig unveränderbar gespeichert, so dass ein Anwender des erfindungsgemäßen Kältemittelverdichters 10 keinen Einfluss auf die Lage der Einsatzgrenze EG und der absoluten Einsatzgrenze AEG hat, sondern beim Einsatz des erfindungsgemäßen Kältemittelverdichters 10 in dem vom Hersteller fest vorgegebenen Einsatzfeld EF arbeiten und sich somit sicher sein kann, dass der Kältemittelverdichter 10 beim Betrieb keine Beschädigung erfährt.

Die im Zusammenhang mit Fig. 6 beschriebene erste Ausführungsform der Verdichterüberwachung 210 reagiert somit erst dann, wenn die Einsatzgrenze EG oder die absolute Einsatzgrenze AEG überschritten wird, so dass selbst bei Ausgabe der Grenzmeldung GM die übergeordnete Steuerung 230 vielfach nicht den Kältemittelkreislauf 232 derart steuern kann, dass eine Abschaltung des Kältemittelverdichters 10 vermieden wird.

Aus diesem Grund ist bei einer zweiten verbesserten Ausführungsform der Verdichterüberwachung 210 vorteilhafterweise vorgesehen, dass die Verdichterüberwachung 210 die relative Lage des Verdichterzustands VZ im Einsatzfeld EF relativ zu der Einsatzgrenze EG erfasst.

Dieses Erfassen des Verdichterzustandes VZ innerhalb des Einsatzfeldes EF relativ zur Einatzgrenze EG kann dabei in unterschiedlichster Art und Weise erfolgen.

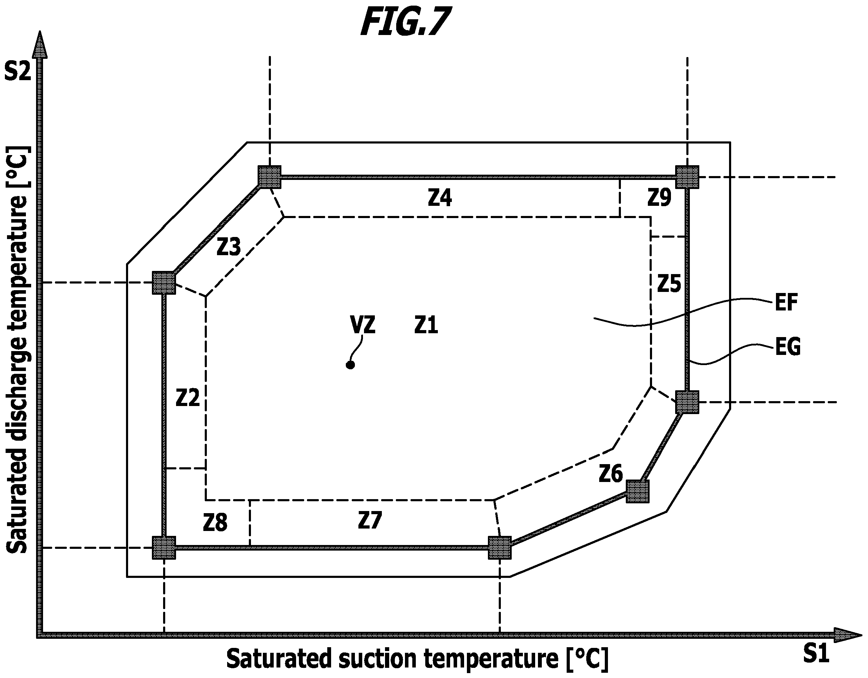

Bei einem ersten, in Fig. 7 dargestellten Ausführungsbeispiel werden innerhalb des Einsatzfeldes EF mehrere Zustandszonen, beispielsweise Zustandszonen Z1 bis Z9, definiert. Dabei stellt die Zustandszone Z1 eine Zone dar, bei welcher keine Reaktion der Verdichterüberwachung 210 erforderlich ist, da alle Verdichterzustände V2 innerhalb der Zustandszone Z1 weit von der Einsatzgrenze EG entfernt sind, so dass die übergeordnete Steuerung 230 den Verdichterzustand VZ beim Betrieb des Kühlkreislaufs 232 nicht beachten muss.

Stellt somit die Verdichterüberwachung 210 fest, dass der Verdichterzustand VZ innerhalb der Zustandszone Z1 liegt, so sind seitens der Verdichterüberwachung 210 keine Maßnahmen erforderlich. Die Zustandszone Z1 wird daher als Regelbetriebszone bezeichnet.

Dagegen liegen die Zustandszonen Z2, Z3, Z4, Z5, Z6, Z7, Z8 und Z9 unmittelbar an die Einsatzgrenze EG angrenzend innerhalb des Einsatzfeldes EF und stellen Warnzonen dar, das heißt, dass stets dann, wenn der Verdichterzustand VZ innerhalb einer dieser Warnzonen Z2, Z3, Z4, Z5, Z6, Z7, Z8 und Z9 liegt, die Verdichterüberwachung 210 eine Meldung M über die Schnittstelle 242 an die übergeordnete Steuerung 230 abgibt.

Da eine für alle Warnzonen Z2 bis Z9 einheitliche Meldung M jedoch der übergeordneten Steuerung 230 nicht anzeigen würde, welcher Seite der Einsatzgrenze EG sich der Verdichterzustand VZ nähert, sind bei einem Ausführungsbeispiel die Warnzonen Z2 bis Z9 als voneinander getrennte Warnzonen definiert, so dass je nach Warnzone Z2 bis Z9, in welche der Verdichterzustand VZ eintritt, unterschiedliche Warnsignale W2 bis W9 als Meldung M abgegeben werden.

Tritt beispielsweise der Verdichterzustand VZ in die Warnzone Z2 ein, so wird ein Warnsignal W2 ausgegeben, das der übergeordneten Steuerung 230 die Information vermittelt, dass die erste Sättigungstemperatur S 1 am Saugeinlass 90 nieder ist und somit bei weiterer Erniedrigung der ersten Sättigungstemperatur S1 die Gefahr besteht, dass der Verdichterzustand VZ die Einsatzgrenze EG in Richtung zu niedriger erster Sättigungstemperatur überschreitet.

Somit ist die übergeordnete Steuerung 230 in der Lage, zur Erhöhung der ersten Sättigungstemperatur S1 die erforderlichen Maßnahmen einzuleiten.

Derartige Maßnahmen, die die übergeordnete Steuerung 230 im Kältemittelkreislauf einleiten kann, sind beispielsweise eine Erhöhung der Verdichterleistung oder eine Erhöhung des Massenstroms.

Tritt dagegen der Verdichterzustand VZ in die Warnzone Z3 ein, so wird das Warnsignal W3 ausgegeben, das der übergeordneten Steuerung 220 vermittelt, dass die erste Sättigungstemperatur S1 am Saugeinlass 90 niedrig und die zweite Sättigungstemperatur S2 am Druckauslass 42 hoch ist.

Auch hier kann die übergeordnete Steuerung 230 die notwendige Maßnahmen einleiten, beispielsweise die Verdichterleistung reduzieren, die Temperatur des Verflüssigers 234 erniedrigen oder gegebenenfalls ein Abtauen des Verdampfers 238 einleiten.

Tritt der Verdichterzustand VZ in die Warnzone Z4 ein, so wird das Warnsignal W4 abgegeben, welches der übergeordneten Steuerung 220 übermittelt, dass zwar die erste Sättigungstemperatur S1 am Saugeinlass 90 in Ordnung ist, jedoch die zweite Sättigungstemperatur S2 am Druckauslass 42 hoch ist.

In diesem Fall hat die übergeordnete Steuerung 230 die Möglichkeit, entweder die Verdichterleistung zu reduzieren oder die Temperatur des Verflüssigers 234 zu senken.

Tritt der Verdichterzustand VZ in die Warnzone Z5 ein, so wird das Warnsignal W5 ausgegeben. Mit diesem Warnsignal WS wird der übergeordneten Steuerung 230 vermittelt, dass die erste Sättigungstemperatur S1 am Saugeinlass 90 hoch ist, jedoch die zweite Sättigungstemperatur am Druckauslass 42 im tolerablen Bereich liegt.

Bei Eintritt des Verdichterzustandes VZ in die Warnzone Z6 wird das Warnsignal W6 abgegeben, welches der übergeordneten Steuerung 230 übermittelt, dass die erste Sättigungstemperatur S1 im Saugeinlass 90 hoch ist und die zweite Sättigungstemperatur S2 am Druckauslass 42 niedrig ist.

Für den Fall, dass der Verdichterzustand VZ in die Warnzone Z7 eintritt, der übergeordneten Steuerung 230 übermittelt, dass die erste Sättigungstemperatur S1 im Saugeinlass 90 in einem tolerablen Bereich liegt, jedoch die zweite Sättigungstemperatur S2 im Druckauslass 42 niedrig ist.

Die Warnzonen Z2 und Z7 könnten einander angrenzen.

Um eine noch bessere Information über den Verdichterzustand VZ im Grenzbereich zwischen der Warnzone Z2 und der Warnzone Z7 zu erhalten, ist die Warnzone Z8 vorgesehen, bei welcher, wenn der Verdichterzustand VZ in diese eintritt das Warnsignal W8 ausgegeben wird, das der übergeordneten Steuerung 230 übermittelt, dass die erste Sättigungstemperatur S1 und die zweite Sättigungstemperatur S2 niedrig sind.

Schließlich kann auch noch zwischen der Warnzone Z4 und der Warnzone Z5 eine zusätzliche Warnzone Z9 vorgesehen sein, so dass bei in dieser eintretenden Verdichterzustand VZ das Warnsignal W9 ausgegeben wird, das eine hohe erste Sättigungstemperatur S1 und eine hohe Sättigungstemperatur S2 meldet.

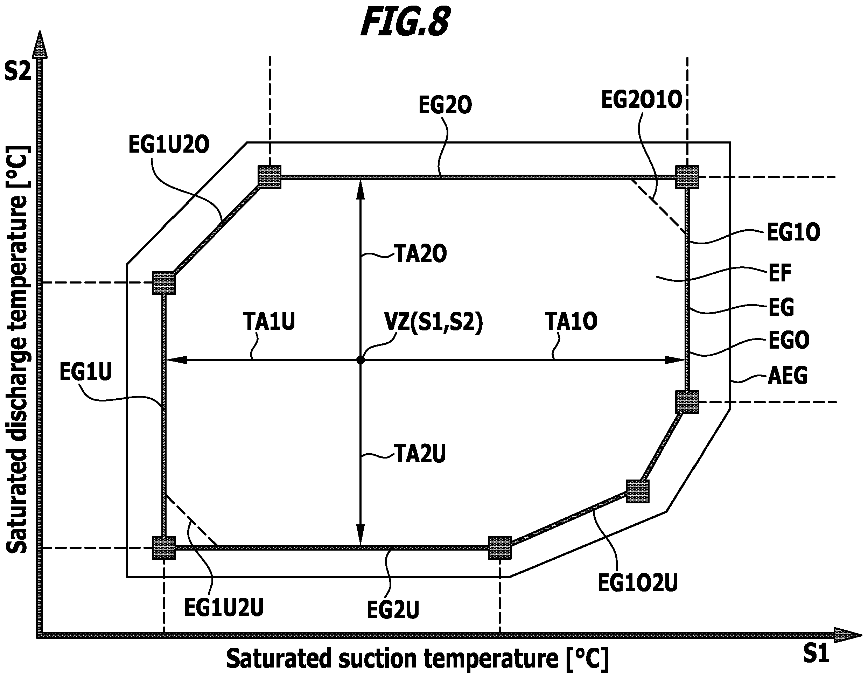

Alternativ oder ergänzend zu der bislang beschriebenen Arbeitsweise der erfindungsgemäßen Verdichterüberwachung ist bei einem zweiten Ausführungsbeispiel, dargestellt in Fig. 8, vorgesehen, dass die Verdichterüberwachung 210 bei jedem im Einsatzfeld EF innerhalb der Einsatzgrenze EG liegenden Verdichterzustand VZ dessen Abstand TA von der Einsatzgrenze EG ermittelt.

Dies erfolgt beispielsweise dadurch, dass Verdichterzustand VZ von einzelnen Einsatzgrenzabschnitten EG1U, EG2O, EG1O oder auch EG1U2O oder EG1O2U der Einsatzgrenze EG einen die relative Lage des Verdichterzustandes VZ zu der Einsatzgrenze EG definierenden Abstand TA aufweist.

Diese relativen Abstände TA des jeweiligen Verdichterzustands VZ werden beispielsweise im Fall der zur Achse S1 des Einsatzdiagramms parallelen Richtung als Abstand TA1U, das heißt der Temperaturabstand zur unteren Einsatzgrenze EG1U, und als Abstand TA1O, das heißt der Temperaturabstand zur oberen Einsatzgrenze EG1O, angegeben.

Ferner ermittelt die Verdichterüberwachung 210 den relativen Abstand des jeweiligen Verdichterzustandes VZ von der unteren Einsatzgrenze EG2U als Abstand TA2U und den relativen Abstand von der oberen Einsatzgrenze EG2O als Abstand TA2O im Fall der zur Achse S2 des Einsatzdiagramms parallelen Richtung.

Das heißt, dass die Verdichterüberwachung 210 beispielsweise vier Abstandswerte TA1U, TA1O, TA2U und TA2O erzeugt und ständig oder nach Zeitintervallen der übergeordneten Steuerung 230 als Meldung M übermittelt, so dass die übergeordnete Steuerung 230 anhand dieser Abstandswerte TA1U, TA1O, TA2U, TA2O selbst in der Lage ist zu ermitteln, ob sich der Verdichterzustand VZ der Einsatzgrenze EG annähert oder ausreichend weit von dieser entfernt ist. Die übergeordnete Steuerung 230 ist bei Verarbeitung dieser Abstandswerte selbstständig in der Lage, entsprechend der Trägheitsparameter des Kältemittelkreislaufs 232, in welchem der erfindungsgemäße Kältemittelverdichter 10 eingebunden ist, rechtzeitig bevor der Verdichterzustand VZ die Einsatzgrenze EG erreicht, Maßnahmen zu ergreifen, um zu verhindern, dass der Verdichterzustand VZ die Einsatzgrenze EG überschreitet.

Alternativ oder ergänzend besteht bei diesem Ausführungsbeispiel aber auch noch die Möglichkeit, den relativen Abstand des Verdichterzustandes VZ von der Einsatzgrenze EG noch präziser zu erfassen, beispielsweise dadurch, dass zusätzlich auch noch ein Abstand von einem Einsatzgrenzabschnitt EG1U2O erfasst wird, der zwischen dem Einsatzgrenzabschnitt EG1U und EG2O verläuft, oder auch dass zusätzlich noch ein Abstand von einem Einsatzgrenzabschnitt EG1O2U erfasst wird, der zwischen dem Einsatzgrenzabschnitt EG1O und dem Einsatzgrenzabschnitt EG2U verläuft, oder dass ein Abstand von einem Einsatzgrenzabschnitt EG1U2U oder von einem Einsatzgrenzabschnitt EG2O1O erfasst wird.

Darüber hinaus besteht die Möglichkeit, bereits seitens der Verdichterüberwachung 210 nicht nur die Abstände TA zu ermitteln, sondern auch die zeitliche Änderung der Abstände TA, um somit Änderungen des Verdichterzustandes VZ bezogen auf die Zeit zu erfassen und diesbezüglich ebenfalls der übergeordneten Steuerung 230 noch weitere Informationen hinsichtlich der zeitlichen Änderung des Verdichterzustandes VZ zu übermitteln, so dass diese noch besser in der Lage ist durch geeignete Steuerung des Kühlkreislaufs 232 mit dem Kältemittelverdichter 10, dem Verflüssiger 234 dem Expansionsventil 236 und dem Verdampfer 238 rechtzeitig zu verhindern, dass der Verdichterzustand VZ die Einsatzgrenze EG erreicht.

Die Verdichterüberwachung 210 überwacht ferner noch mit dem Temperatursensor 216 die Temperatur ST des Schmiermittelbades 190.

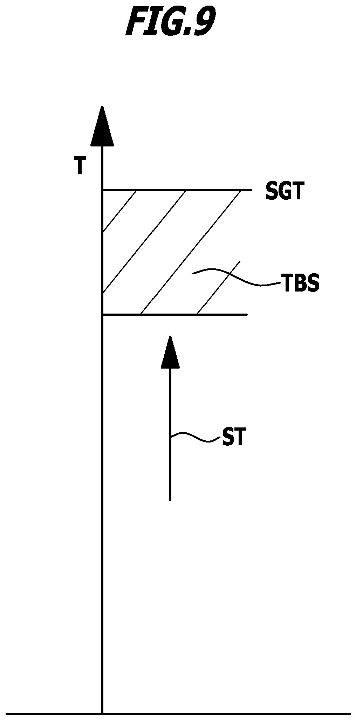

Hierzu ist, wie in Fig. 9 dargestellt, eine Schmiermittelgrenztemperatur SGT in dem Speicher 200 gespeichert, mit welchem die Verdichterüberwachung 210 die Schmiermitteltemperatur ST vergleicht.

Überschreitet dabei die Schmiermitteltemperatur ST die Schmiermittelgrenztemperatur SGT, so wird umgehend ein Abschalten des Kältemittelverdichters 10 ausgelöst, nämlich dadurch, dass die Verdichterüberwachung 210 das Abschaltsignal AS ausgibt.

Um der übergeordneten Steuerung 230 nicht Möglichkeit zu eröffnen, rechtzeitig vor einem Überschreiten der Schmiermittelgrenztemperatur SGT durch die Schmiermitteltemperatur ST Maßnahmen zur Reduzierung der Schmiermitteltemperatur ST einzuleiten, ist unterhalb der Schmiermittelgrenztemperatur SGT ein Temperaturbereich TBS vorgesehen, mit welchem die Verdichterüberwachung 210 die Schmiermitteltemperatur ST ebenfalls vergleicht.

Stellt die Verdichterüberwachung 210 dabei fest, dass die Schmiermitteltemperatur ST den Temperaturbereich TBS erreicht, so erzeugt die Verdichterüberwachung 210 eine Meldung MS, welche diese über die Schnittstelle 242 der übergeordneten Steuerung 230 übermittelt, so dass die übergeordnete Steuerung 230 entsprechend reagieren kann.

Darüber hinaus überwacht die Verdichtersteuerung 210 auch noch die Motortemperatur MT des Elektromotors 50.

Diese Motortemperatur MT wird mit einer Motorgrenztemperatur MGT, die im Speicher 240 abgelegt ist, verglichen und die Verdichterüberwachung 210 löst dann, wenn die Motortemperatur MT die Motorgrenztemperatur MGT übersteigt, ein Abschalten des Kältemittelverdichters 10 durch Ausgabe des Abschaltsignals AS aus.

Um der übergeordneten Steuerung 230 die Möglichkeit zu eröffnen, gegebenenfalls auf einen Anstieg der Motortemperatur MT in einen Bereich nahe der Motorgrenztemperatur MGT zu reagieren, ist unterhalb der Motorgrenztemperatur MGT ein Temperaturbereich TBM vorgesehen, der ebenfalls in dem Speicher 240 abgelegt und fest definiert ist.

Die Verdichterüberwachung 210 vergleicht ebenfalls die Motortemperatur MT mit dem Temperaturbereich TBM und löst dann, wenn die Motortemperatur den Temperaturbereich TBM erreicht oder in diesem liegt, eine Meldung MM aus, die der übergeordneten Steuerung 230 die Information vermittelt, dass nunmehr die Motortemperatur MT nahe der Motorgrenztemperatur MGT liegt, so dass die übergeordnete Steuerung 230 gegebenenfalls noch die Möglichkeit hat, zu reagieren, um die Motortemperatur MT abzusenken.

Darüber hinaus überwacht die Verdichterüberwachung 210 noch mittels des Schmiermittelstandsensors 218 die Menge des Schmiermittels.

Beispielsweise kann der Schmiermittelstandssensor 218 so arbeiten, dass dieser erfasst, ob das Schmiermittelbad des minimalen Schmiermittelstand überschreitet und für den Fall dass dies nicht so ist, die Meldung MMS auslösen und der übergeordneten Steuerung 230 übermitteln.

Gegebenenfalls kann nach Übermittlung der Meldung MMS auch ein Abschalten des Kältemittelverdichters 10 durch das Abschaltsignal AS ausgelöst werden. Es besteht aber auch die Möglichkeit, bereits dann, wenn das Schmiermittelbad 190 den minimalen Schmiermittelstand unterschreitet, den Kältemittelverdichter 10 durch das Abschaltsignal AS auszuschalten.

Arbeitet der Schmiermittelstandsensor 218 so, dass er kontinuierlich den Schmiermittelstand im Schmiermittelbad 190 erfasst, so kann bei Annäherung des Schmiermittelstandes an den minimalen Schmiermittelstand ebenfalls rechtzeitig vor Erreichen des minimalen Schmiermittelstands die Meldung MMS an die übergeordnete Steuerung 230 abgegeben werden, so dass diese den Betreiber des Kühlkreislaufs 232 auf eine notwendige Wartung hinweisen kann.

Bei allen Ausführungsbeispielen und Ausführungsformen ist vorzugsweise während einer Anlaufphase des Kältemittelverdichters 10 vorgesehen, dass die Verdichterüberwachung 210 keine Abschaltung des Antriebsmotors 50 einleitet und keine Informationen an die übergeordnete Steuerung 230 meldet, um dem Kältemittelverdichter 10 die Möglichkeit zu eröffnen, strömungsfrei einen Verdichterzustand VZ im Einsatzfeld EF zu erreichen.

Wenn dann der Verdichterzustand VZ das Einsatzfeld EF erreicht hat, kann die Verdichterüberwachung die vorstehend beschriebenen Funktionen ausführen.

## Patentansprüche

1. Kältemittelverdichter (10) umfassend
einen Antriebsmotor (50),
eine Verdichtereinheit (70), welche ein über einen Saugeinlass (90) eintretendes Kältemittel verdichtet und über einen Druckauslass (42) austreten lässt, und Mittel (212) zum Erfassen einer ersten Sättigungstemperatur (S1) im Saugeinlass (90) und Mittel (214) zum Erfassen einer zweiten Sättigungstemperatur (S2) im Druckauslass (42) aufweist,
**dadurch gekennzeichnet, dass** der Kältemittelverdichter (10) eine in eine Verdichtersteuerung (200) integrierte Verdichterüberwachung (210) aufweist, welche einen Verdichterzustand (VZ) durch einen ersten Zustandswert (S1), der einer ersten Sättigungstemperatur (S1) im Saugeinlass (90) entspricht, und einen zweiten Zustandswert (S2), der einer zweiten Sättigungstemperatur (S2) im Druckauslass (42) entspricht, ermittelt, welche den Verdichterzustand (VZ) mit zulässigen Verdichterzuständen vergleicht, die in einem verdichterspezifisch vorgegebenen Einsatzfeld (EF) eines Einsatzdiagramms liegen, das von einer eine geschlossene Umrandung des Einsatzfeldes (EF) bildenden Einsatzgrenze (EG) umschlossen ist, und welche dann, wenn der Verdichterzustand (VZ) das Einsatzfeld (EF) verlässt, ein Abschalten des Kältemittelverdichters (10) einleitet, wobei die Verdichterüberwachung (210) zum Abschalten des Antriebsmotors (50) unmittelbar mit der Motorsteuerung (202) der Verdichtersteuerung (200) zusammenwirkt.

2. Kältemittelverdichter nach Anspruch 1 **dadurch gekennzeichnet, dass** das Einsatzfeld (EF) der zulässigen Verdichterzustände (VZ) in einem Speicher (240) der Verdichterüberwachung (210) anwenderseitig unveränderbar abgelegt ist.

3. Kältemittelverdichter nach einem der voranstehenden Ansprüche,
**dadurch gekennzeichnet, dass** die Verdichterüberwachung (210) die relative Lage des ermittelten Verdichterzustandes (VZ) in Bezug auf eine das Einsatzfeld (EF) umschließende Einsatzgrenze (EG) ermittelt und die Information über die relative Lage des Verdichterzustandes (VZ) an einer Steuerungsschnittstelle (242) für eine übergeordnete Steuerung (230) eines Kühlkreislaufs (232) zur Verfügung stellt.

4. Kältemittelverdichter nach Anspruch 3, **dadurch gekennzeichnet, dass** die Verdichterüberwachung (210) die relative Lage des Verdichterzustandes (VZ) im Einsatzfeld (EF) in Bezug auf die Einsatzgrenze (EG) dadurch ermittelt, dass im Einsatzfeld (EF) Zustandszonen (Z) definiert sind und dass die Verdichterüberwachung (210) überprüft, ob der Verdichterzustand (VZ) in einer dieser Zustandszonen (Z) liegt oder nicht.

5. Kältemittelverdichter nach Anspruch 4, **dadurch gekennzeichnet, dass** in dem Einsatzfeld (EF) im Anschluss an die Einsatzgrenze (EG) mehrere Warnzonen als Zustandszonen (Z2 bis Z9) definiert sind und dass die Verdichterüberwachung (210) überprüft, ob der Verdichterzustand (VZ) in einer der Warnzonen (Z2 bis Z9) liegt, wobei die Verdichterüberwachung (210) dann, wenn der Verdichterzustand (VZ) in einer der Warnzonen (Z2 bis Z9) liegt, an der Schnittstelle ein die jeweilige Warnzone (Z2 bis Z9) kennzeichnendes Warnsignal (W2 bis W9) als Meldung M ausgibt.

6. Kältemittelverdichter nach einem der Ansprüche 4 bis 5, **dadurch gekennzeichnet, dass** innerhalb der um das Einsatzfeld (EF) umlaufenden Einsatzgrenze (EG) mehrere, längs der Einsatzgrenze (EG) umlaufend aneinander anschließende Warnzonen (Z2 bis Z9) angeordnet sind.

7. Kältemittelverdichter nach einem der Ansprüche 4 oder 5, **dadurch gekennzeichnet, dass** als Warnzone (Z2 bis Z9) mindestens eine der nachfolgend definierten Warnzonen vorgesehen ist:
eine Warnzone (Z2) für eine niedrige erste Sättigungstemperatur (S1),
eine Warnzone (Z4) für eine hohe zweite Sättigungstemperatur (S2),
eine Warnzone (Z5) für eine hohe erste Sättigungstemperatur (S1),
eine Warnzone (Z7) für eine niedrige zweite Sättigungstemperatur (S2),
eine Warnzone (Z3) für eine niedrige erste Sättigungstemperatur (S1) und eine hohe zweite Sättigungstemperatur (S2),
eine Warnzone (Z6) für eine hohe erste Sättigungstemperatur (S1) und eine niedrige zweite Sättigungstemperatur(S2),
eine Warnzone (Z8) für eine niedrige erste Sättigungstemperatur (S1) und eine niedrige zweite Sättigungstemperatur (S2),
eine Warnzone (Z9) für eine hohe erste Sättigungstemperatur (S1) und eine hohe zweite Sättigungstemperatur (S2).

8. Kältemittelverdichter nach einem der Ansprüche 3 bis 7, **dadurch gekennzeichnet, dass** die Verdichterüberwachung (210) die relative Lage des ermittelten Verdichterzustandes (VZ) im Einsatzfeld (EF) in Form eines relativen Abstandes (TA) von der Einsatzgrenze (EG) ermittelt und an der Schnittstelle (242) als Meldung (M) ausgibt.

9. Kältemittelverdichter nach Anspruch 8, **dadurch gekennzeichnet, dass** zur Ermittlung des Abstandes (TA) des Verdichterzustandes (VZ) von der Einsatzgrenze (EG) eine Ermittlung eines Abstandes von mindestens einem oder mehrere der folgenden Einsatzgrenzabschnitte erfolgt:
einem Einsatzgrenzabschnitt (EG1U), der einer ersten niedrigen Sättigungstemperatur (S1) entspricht,
einem Einsatzgrenzabschnitt (EG2O), der einer hohen zweiten Sättigungstemperatur (S2) entspricht,
einem Einsatzgrenzabschnitt(EG1O), der einer hohen ersten Sättigungstemperatur (S1) entspricht,
einem Einsatzgrenzabschnitt (EG2U), der einer niedrigen zweiten Sättigungstemperatur (S2) entspricht,
einem Einsatzgrenzabschnitt (EG1U2O), der einer niedrigen ersten Sättigungstemperatur (S1) und einer hohen zweiten Sättigungstemperatur (S2) entspricht,
einem Einsatzgrenzabschnitt (EG1O2U), der einer hohen ersten Sättigungstemperatur (S1) und einer niedrigen zweiten Sättigungstemperatur (S2) entspricht,
einem Einsatzgrenzabschnitt (EG1U2U), der einer niedrigen ersten Sättigungstemperatur (S1) entspricht und einer niedrigen zweiten Sättigungstemperatur (S2) entspricht,
einem Einsatzgrenzabschnitt (EG1O2O), der einer hohen ersten Sättigungstemperatur (S1) entspricht und einer hohen zweiten Sättigungstemperatur (S2) entspricht.

10. Kältemittelverdichter nach Anspruch 8 oder 9, **dadurch gekennzeichnet, dass** die Verdichterüberwachung (210) die zeitliche Änderung des Abstandes (TA) des Verdichterzustandes (VZ) von der Einsatzgrenze (EG) ermittelt.

11. Kältemittelverdichter nach einem der voranstehenden Ansprüche,
**dadurch gekennzeichnet, dass** die Einsatzgrenze (EG) durch eine absolute Einsatzgrenze (AEG) umschlossen ist, die außerhalb des Einsatzfeldes (EF) und außerhalb der Einsatzgrenze (EG) sowie im Abstand von der Einsatzgrenze (EG) verläuft und dass die Verdichterüberwachung (210) so arbeitet, dass dann, wenn der Verdichterzustand (VZ4) außerhalb der absoluten Einsatzgrenze (AEG) liegt, ein sofortiges Abschalten des Kältemittelverdichters (10) erfolgt.

12. Kältemittelverdichter nach einem der voranstehenden Ansprüche,
**dadurch gekennzeichnet, dass** die Verdichterüberwachung (210) eine Schmiermitteltemperatur (ST) erfasst und dass die Verdichterüberwachung (210) bei Überschreiten einer Schmiermittelgrenztemperatur (SGT) eine Abschaltung des Kältemittelverdichters (10) einleitet.

13. Kältemittelverdichter nach Anspruch 12, **dadurch gekennzeichnet, dass** die Verdichterüberwachung (210) den Abstand der Schmiermitteltemperatur (ST) von der Schmiermittelgrenztemperatur (SGT) ermittelt und insbesondere bei einer Annäherung an Schmiermittelgrenztemperatur (SGT) eine Meldung (MS) abgibt.

14. Kältemittelverdichter nach einem der voranstehenden Ansprüche,
**dadurch gekennzeichnet, dass** die Verdichterüberwachung (210) eine Motortemperatur (MT) überwacht und bei Überschreiten einer Motorgrenztemperatur (MGT) den Kältemittelverdichter (10) abschaltet.

15. Kältemittelverdichter nach Anspruch 14, **dadurch gekennzeichnet, dass** die Verdichterüberwachung (210) dann, wenn die Motortemperatur (MT) einen unterhalb der Motorgrenztemperatur (MGT) liegenden Temperaturbereich (TBM) erreicht, eine Motortemperaturwarnung (MM) an der Schnittstelle (242) ausgibt.

16. Kältemittelverdichter nach einem der voranstehenden Ansprüche,
**dadurch gekennzeichnet, dass** die Verdichterüberwachung (210) einen Schmiermittelstand erfasst und dass bei Unterschreiten einer Schmiermittelgrenze die Verdichterüberwachung (210) ein Abschalten des Kältemittelverdichters (10) einleitet.

17. Verdichterüberwachung (210) für einen Kältemittelverdichter (10) mit einem Antriebsmotor (50),
einer Verdichtereinheit (70), welche ein über einen Saugeinlass (90) eintretendes Kältemittel verdichtet und über einen Druckauslass (42) austreten lässt, und Mittel (212) zum Erfassen einer ersten Sättigungstemperatur (S1) im Saugeinlass (90) und Mittel (214) zum Erfassen einer zweiten Sättigungstemperatur (S2) im Druckauslass (42) aufweist, **dadurch gekennzeichnet, dass** die Verdichterüberwachung (210) einen Verdichterzustand (VZ) durch einen ersten Zustandswert (S1), der einer ersten Sättigungstemperatur (S1) im Saugeinlass (90) entspricht, und einen zweiten Zustandswert (S2), der einer zweiten Sättigungstemperatur im Druckauslass (42) entspricht, ermittelt, dass die Verdichterüberwachung (210) den Verdichterzustand (VZ) zulässigen Verdichterzuständen vergleicht die in einem verdichterspezifisch vorgegebenen Einsatzfeld (EF) eines Einsatzdiagramms liegen, das von einer eine geschlossene Umrandung des Einsatzfeldes (EF) bildenden Einsatzgrenze (EG) umschlossen ist, und dann, wenn der Verdichterzustand (VZ) das Einsatzfeld (EF) verlässt, ein Abschalten des Kältemittelverdichters (10) einleitet, dass die Verdichterüberwachung (210) die relative Lage des ermittelten Verdichterzustandes (VZ) in Bezug auf eine das Einsatzfeld (EF) umschließende Einsatzgrenze (EG) ermittelt und die Information über die relative Lage des Verdichterzustandes (VZ) an einer Steuerungsschnittstelle (242) für eine übergeordnete Steuerung (230) eines Kühlkreislaufs (232) zur Verfügung stellt.

## Claims

1. A refrigerant compressor (10) comprising
a drive motor (50),
a compressor unit (70) which compresses a refrigerant entering through a suction inlet (90) and allows it to exit through a pressure outlet (42), and means (212) for detecting a first saturation temperature (S1) in the suction inlet (90) and means (214) for detecting a second saturation temperature (S2) in the pressure outlet (42),
**characterized in that** the refrigerant compressor (10) comprises a compressor monitoring system (210) which is integrated into a compressor control system (200) and which determines a compressor condition (VZ) by means of a first condition value (S1) that corresponds to a first saturation temperature (S1) in the suction inlet (90) and a second condition value (S2) that corresponds to a second saturation temperature (S2) in the pressure outlet (42), and which compares the compressor condition (VZ) with permissible compressor conditions lying in a preset compressor-specific field of application (EF) of an operating diagram which is surrounded by an application boundary defining an enclosed border of the field of application (EF), and which, when the compressor condition (VZ) departs from the field of application (EF), initiates a process of switching-off the refrigerant compressor (10), wherein, for the purposes of switching-off the drive motor (50), the compressor monitoring system (210) cooperates directly with the motor control system (202) of the compressor control system (200).

2. A refrigerant compressor in accordance with Claim 1, **characterized in that** the field of application (EF) of the permissible compressor conditions (VZ) is stored in a memory (240) of the compressor monitoring system (210) such as to be unchangeable by the user.

3. A refrigerant compressor in accordance with any of the preceding Claims, **characterized in that** the compressor monitoring system (210) determines the relative position of the determined compressor condition (VZ) with reference to an application boundary (EG) enclosing the field of application (EF) and makes the information about the relative position of the compressor condition (VZ) available at a control interface (242) for a higher-level control system (230) of a coolant circulation system (232).

4. A refrigerant compressor in accordance with Claim 3, **characterized in that** the compressor monitoring system (210) determines the relative position of the compressor condition (VZ) in the field of application (EF) with reference to the application boundary (EG) **in that** status zones (Z) are defined in the field of application (EF) and **in that** the compressor monitoring system (210) checks as to whether the compressor condition (VZ) lies in one of these status zones (Z) or not.

5. A refrigerant compressor in accordance with Claim 4, **characterized in that** status zones (Z2 to Z9) in the form of a plurality of warning zones adjoining the application boundary (EG) are defined in the field of application (EF), and **in that** the compressor monitoring system (210) checks as to whether the compressor condition (VZ) lies in one of the warning zones (Z2 to Z9), whereupon the compressor monitoring system (210) then sends a message M in the form of a warning signal (W2 to W9) characterizing the respective warning zone (Z2 to Z9) to the interface if the compressor condition (VZ) lies in one of the warning zones (Z2 to Z9).

6. A refrigerant compressor in accordance with either of the Claims 4 to 5, **characterized in that** a plurality of warning zones (Z2 to Z9) extending along the application boundary (EG) are arranged within the application boundary (EG) extending around the field of application (EF).

7. A refrigerant compressor in accordance with either of the Claims 4 to 5, **characterized in that** at least one of the warning zones defined in the following is provided as a warning zone (Z2 to Z9):
a warning zone (Z2) for a low first saturation temperature (S1),
a warning zone (Z4) for a high second saturation temperature (S2),
a warning zone (Z5) for a high first saturation temperature (S1),
a warning zone (Z7) for a low second saturation temperature (S2),
a warning zone (Z3) for a low first saturation temperature (S1) and a high second saturation temperature (S2),
a warning zone (Z6) for a high first saturation temperature (S1) and a low second saturation temperature(S2),
a warning zone (Z8) for a low first saturation temperature (S1) and a low second saturation temperature (S2),
a warning zone (Z9) for a high first saturation temperature (S1) and a high second saturation temperature (S2).

8. A refrigerant compressor in accordance with any of the Claims 3 to 7, **characterized in that** the compressor monitoring system (210) determines the relative position of the determined compressor condition (VZ) in the field of application (EF) in the form of a relative spacing (TA) from the application boundary (EG) and sends it to the interface (242) as a message (M).

9. A refrigerant compressor in accordance with Claim 8, **characterized in that** a determination of a spacing from at least one or more of the following application boundary sections is effected for determining the spacing (TA) of the compressor condition (VZ) from the application boundary (EG):
an application boundary section (EG1U), which corresponds to a first low saturation temperature (S1),
an application boundary section (EG2O) which corresponds to a high second saturation temperature (S2),
an application boundary section(EG1O) which corresponds to a high first saturation temperature (S1),
an application boundary section (EG2U) which corresponds to a low second saturation temperature (S2),
an application boundary section (EG1U2O) which corresponds to a low first saturation temperature (S1) and a high second saturation temperature (S2),
an application boundary section (EG1O2U) which corresponds to a high first saturation temperature (S1) and a low second saturation temperature (S2),
an application boundary section (EG1U2U) which corresponds to a low first saturation temperature (S1) and corresponds to a low second saturation temperature (S2),
an application boundary section (EG1020) which corresponds to a high first saturation temperature (S1) and corresponds to a high second saturation temperature (S2).

10. A refrigerant compressor in accordance with Claim 8 or 9, **characterized in that** the compressor monitoring system (210) determines the temporal change in the spacing (TA) of the compressor condition (VZ) from the application boundary (EG).

11. A refrigerant compressor in accordance with any of the preceding Claims, **characterized in that** the application boundary (EG) is surrounded by an absolute application boundary (AEG), which runs outside the field of application (EF) and outside the application boundary (EG) and at a spacing from the application boundary (EG) and **in that** the compressor monitoring system (210) works in such a way that, if the compressor condition (VZ4) lies outside the absolute application boundary (AEG), then an immediate process of switching off the refrigerant compressor (10) takes place.

12. A refrigerant compressor in accordance with any of the preceding Claims, **characterized in that** the compressor monitoring system (210) detects a lubricant temperature (ST), and **in that** the compressor monitoring system (210) initiates a process of switching-off the refrigerant compressor (10) when a lubricant limit temperature (SGT) is exceeded.

13. A refrigerant compressor in accordance with Claim 12, **characterized in that** the compressor monitoring system (210) determines the spacing of the lubricant temperature (ST) from the lubricant limit temperature (SGT)) and, in particular, delivers a message (MS) if the lubricant limit temperature (SGT) is approached.

14. A refrigerant compressor in accordance with any of the preceding Claims, **characterized in that** the compressor monitoring system (210) monitors a motor temperature (MT) and switches off the refrigerant compressor (10) if a motor limit temperature (MGT) is exceeded.

15. A refrigerant compressor in accordance with Claim 14, **characterized in that**, in the event of the motor temperature (MT) reaching a temperature range (TBM) lying below the motor limit temperature (MGT), the compressor monitoring system (210) sends a motor temperature warning (MM) to the interface (242).

16. A refrigerant compressor in accordance with any of the preceding Claims, **characterized in that** the compressor monitoring system (210) detects a lubricant level, and **in that** the compressor monitoring system (210) initiates a process of switching-off the refrigerant compressor (10) if the level falls below a lubricant limit.

17. A compressor monitoring system (210) for a refrigerant compressor (10) incorporating a drive motor (50),
a compressor unit (70) which compresses a refrigerant entering through a suction inlet (90) and allows it to exit through a pressure outlet (42), and means (212) for detecting a first saturation temperature (S1) in the suction inlet (90) and means (214) for detecting a second saturation temperature (S2) in the pressure outlet (42),
**characterized in that** the compressor monitoring system (210) determines a compressor condition (VZ) by means of a first condition value (S1) that corresponds to a first saturation temperature (S1) in the suction inlet (90) and a second condition value (S2) that corresponds to a second saturation temperature in the pressure outlet (42), **in that** the compressor monitoring system (210) compares the compressor condition (VZ) with permissible compressor conditions lying in a preset compressor-specific field of application (EF) of an operating diagram which is surrounded by an application boundary defining an enclosed border of the field of application (EF), and which, when the compressor condition (VZ) departs from the field of application (EF) initiates a process of switching-off the refrigerant compressor (10), **in that** the compressor monitoring system (210) determines the relative position of the determined compressor condition (VZ) with reference to an application boundary (EG) enclosing the field of application (EF) and makes the information about the relative position of the compressor condition (VZ) available at a control interface (242) for a higher-level control system (230) of a coolant circulation system (232).

## Revendications

1. Compresseur de fluide frigorigène (10) comprenant
un moteur d'entraînement (50),
un dispositif de compresseur (70), lequel comprime un fluide frigorigène entrant par l'intermédiaire d'une entrée d'aspiration (90) et le fait sortir par l'intermédiaire d'une sortie sous pression (42) et présente des moyens (212) servant à détecter une première température de saturation (S1) dans l'entrée d'aspiration (90) et des moyens (214) servant à détecter une deuxième température de saturation (S2) dans la sortie sous pression (42),
**caractérisé en ce que** le compresseur de fluide frigorigène (10) présente un système de surveillance de compresseur (210) intégré dans une commande de compresseur (200), lequel détermine un état de compresseur (VZ) par une première valeur d'état (S1), qui correspond à une première température de saturation (S1) dans l'entrée d'aspiration (90), et une deuxième valeur d'état (S2), qui correspond à une deuxième température de saturation (S2) dans la sortie sous pression (42), lequel compare l'état de compresseur (VZ) à des états de compresseur admissibles, qui se situent dans un champ d'utilisation (EF), spécifié de manière spécifique au compresseur, d'un diagramme d'application, qui est enfermé par une limite d'application (EG) formant un rebord fermé du champ d'application (EF), et lequel lance, quand l'état de compresseur (VZ) quitte le champ d'application (EF), une désactivation du compresseur de fluide frigorigène (10), dans lequel le système de surveillance de compresseur (210) coopère directement avec la commande de moteur (202) de la commande de compresseur (200) aux fins de la désactivation du moteur d'entraînement (50).

2. Compresseur de fluide frigorigène selon la revendication 1, **caractérisé en ce que** le champ d'application (EF) des états de compresseur (VZ) admissibles est enregistré dans une mémoire (240) du système de surveillance de compresseur (210) de manière inaltérable côté utilisateur.

3. Compresseur de fluide frigorigène selon l'une quelconque des revendications précédentes, **caractérisé en ce que** le système de surveillance de compresseur (210) détermine la position relative de l'état de compresseur (VZ) déterminé par rapport à une limite d'application (EG) renfermant le champ d'application (EF) et fournit l'information portant sur la position relative de l'état de compresseur (VZ) à une interface de commande (242) pour une commande principale (230) d'un circuit de refroidissement (232).

4. Compresseur de fluide frigorigène selon la revendication 3, **caractérisé en ce que** le système de surveillance de compresseur (210) détermine la position relative de l'état de compresseur (VZ) dans le champ d'application (EF) par rapport à la limite d'application (EG) **en ce que** des zones d'état (Z) sont définies dans le champ d'application (EF), et que le système de surveillance de compresseur (210) vérifie si l'état de compresseur (VZ) se situe ou non dans une desdites zones d'état (Z).

5. Compresseur de fluide frigorigène selon la revendication 4, **caractérisé en ce que** plusieurs zones d'avertissement sont définies en tant que zones d'état (Z2 à Z9) dans le champ d'application (EF) dans le prolongement de la limite d'application (EG), et que le système de surveillance de compresseur (210) vérifie si l'état de compresseur (VZ) se situe dans une des zones d'avertissement (Z2 à Z9), dans lequel le système de surveillance de compresseur (210) envoie, quand l'état de compresseur (VZ) se situe dans une des zones d'avertissement (Z2 à Z9), à l'interface un signal d'avertissement (W2 à W9) caractérisant la zone d'avertissement (Z2 à Z9) respective en tant que notification M.

6. Compresseur de fluide frigorigène selon l'une quelconque des revendications 4 et 5, **caractérisé en ce que** plusieurs zones d'avertissement (Z2 à Z9) situées dans le prolongement les unes des autres en périphérie le long de la limite d'application (EG) sont disposées à l'intérieur de la limite d'application (EG) s'étendant en périphérie tout autour du champ d'application (EF).

7. Compresseur de fluide frigorigène selon l'une quelconque des revendications 4 ou 5, **caractérisé en ce qu'**est prévue en tant que zone d'avertissement (Z2 à Z9) au moins une des zones d'avertissement définies ci-après :
une zone d'avertissement (Z2) pour une première température de saturation basse (S1),
une zone d'avertissement (Z4) pour une deuxième température de saturation élevée (S2),
une zone d'avertissement (Z5) pour une première température de saturation élevée (S1),
une zone d'avertissement (Z7) pour une deuxième température de saturation basse (S2),
une zone d'avertissement (Z3) pour une première température de saturation basse (S1) et une deuxième température de saturation élevée (S2),
une zone d'avertissement (Z6) pour une première température de saturation élevée (S1) et une deuxième température de saturation basse (S2),
une zone d'avertissement (Z8) pour une première température de saturation basse (S1) et une deuxième température de saturation basse (S2),
une zone d'avertissement (Z9) pour une première température de saturation élevée (S1) et une deuxième température de saturation élevée (S2).

8. Compresseur de fluide frigorigène selon l'une quelconque des revendications 3 à 7, **caractérisé en ce que** le système de surveillance de compresseur (210) détermine la position relative de l'état de compresseur (VZ) déterminé dans le champ d'application (EF) sous la forme d'un écart relatif (TA) par rapport à la limite d'application (EG) et l'envoie à l'interface (242) en tant que notification (M).

9. Compresseur de fluide frigorigène selon la revendication 8, **caractérisé en ce qu'**est effectuée, pour déterminer l'écart (TA) de l'état de compresseur (VZ) par rapport à la limite d'application (EG), une détermination d'un écart d'au moins un ou plusieurs des tronçons de limite d'application qui suivent :
un tronçon de limite d'application (EG1U), qui correspond à une première température de saturation basse (S1),
un tronçon de limite d'application (EG2O), qui correspond à une deuxième température de saturation élevée (S2),
un tronçon de limite d'application (EG10), qui correspond à une première température de saturation élevée (S1),
un tronçon de limite d'application (EG2U), qui correspond à une deuxième température de saturation basse (S2),
un tronçon de limite d'application (EG1U2O), qui correspond à une première température de saturation basse (S1) et à une deuxième température de saturation élevée (S2),
un tronçon de limite d'application (EG102U), qui correspond à une première température de saturation élevée (S1) et à une deuxième température de saturation basse (S2),
un tronçon de limite d'application (EG1U2U), qui correspond à une première température de saturation basse (S1) et à une deuxième température de saturation basse (S2),
un tronçon de limite d'application (EG1O2O), qui correspond à une première température de saturation élevée (S1) et à une deuxième température de saturation élevée (S2).

10. Compresseur de fluide frigorigène selon la revendication 8 ou 9, **caractérisé en ce que** le système de surveillance de compresseur (210) détermine la modification dans le temps de l'écart (TA) de l'état de compresseur (VZ) par rapport à la limite d'application (EG).

11. Compresseur de fluide frigorigène selon l'une quelconque des revendications précédentes, **caractérisé en ce que** la limite d'application (EG) est enfermée par une limite d'application absolue (AEG), qui s'étend à l'extérieur du champ d'application (EF) et à l'extérieur de la limite d'application (EG) ainsi qu'à l'écart de la limite d'application (EG), et que le système de surveillance de compresseur (210) fonctionne de telle sorte que, quand l'état de compresseur (VZ4) se situe à l'extérieur de la limite d'application absolue (AEG), une désactivation immédiate du compresseur de fluide frigorigène (10) est effectuée.

12. Compresseur de fluide frigorigène selon l'une quelconque des revendications précédentes, **caractérisé en ce que** le système de surveillance de compresseur (210) détecte une température de lubrifiant (ST), et que le système de surveillance de compresseur (210) lance en cas de dépassement d'une température limite de lubrifiant (SGT) une désactivation du compresseur de fluide frigorigène (10).

13. Compresseur de fluide frigorigène selon la revendication 12, **caractérisé en ce que** le système de surveillance de compresseur (210) détermine l'écart de la température de lubrifiant (ST) par rapport à la température limite de lubrifiant (SGT) et émet, en particulier à l'approche d'une température limite de lubrifiant (SGT), une notification (MS).

14. Compresseur de fluide frigorigène selon l'une quelconque des revendications précédentes, **caractérisé en ce que** le système de surveillance de compresseur (210) surveille une température de moteur (MT) et désactive le compresseur de fluide frigorigène (10), en cas de dépassement d'une température limite de moteur (MGT).

15. Compresseur de fluide frigorigène selon la revendication 14, **caractérisé en ce que** le système de surveillance de compresseur (210) envoie, quand la température de moteur (MT) atteint une plage de températures (TBM) inférieure à la température limite de moteur (MGT), un avertissement de température de moteur (MM) à l'interface (242).

16. Compresseur de fluide frigorigène selon l'une quelconque des revendications précédentes, **caractérisé en ce que** le système de surveillance de compresseur (210) détecte un niveau de lubrifiant, et qu'en cas de dépassement d'une limite de lubrifiant, le système de surveillance de compresseur (210) lance une désactivation du compresseur de fluide frigorigène (10).

17. Système de surveillance de compresseur (210) pour un compresseur de fluide frigorigène (10) avec
un moteur d'entraînement (50),
un dispositif de compresseur (70), lequel comprime un fluide frigorigène entrant par l'intermédiaire d'une entrée d'aspiration (90) et le laisse sortir par l'intermédiaire d'une sortie sous pression (42), et présente des moyens (212) servant à détecter une première température de saturation (S1) dans l'entrée d'aspiration (90) et des moyens (214) servant à détecter une deuxième température de saturation (S2) dans la sortie sous pression (42),
**caractérisé en ce que** le système de surveillance de compresseur (210) détermine un état de compresseur (VZ) par une première valeur d'état (S1), qui correspond à une première température de saturation (S1) dans l'entrée d'aspiration (90), et une deuxième valeur d'état (S2), qui correspond à une deuxième température de saturation dans la sortie sous pression (42), **en ce que** le système de surveillance de compresseur (210) compare l'état de compresseur (VZ) à des états de compresseur admissibles, qui se situe dans un champ d'application (EF), spécifié de manière spécifique au compresseur, d'un diagramme d'application, qui est enfermé par une limite d'application (EG) formant un rebord fermé du champ d'application (EF) et lance, quand l'état de compresseur (VZ) quitte le champ d'application (EF), une désactivation du compresseur de fluide frigorigène (10), **en ce que** le système de surveillance de compresseur (210) détermine la position relative de l'état de compresseur (VZ) déterminé par rapport à une limite d'application (EG) renfermant le champ d'application (EF) et fournit l'information portant sur la position relative de l'état de compresseur (VZ) à une interface de commande (242) pour une commande principale (230) d'un circuit de refroidissement (232).
